**Europäisches Patentamt**

**European Patent Office**

**Office européen des brevets**

(19)

(11) Veröffentlichungsnummer : **0 340 496 B1**

(12)

# EUROPÄISCHE PATENTSCHRIFT

(45) Veröffentlichungstag der Patentschrift :
17.06.92 Patentblatt 92/25

(51) Int. Cl.⁵ : **B63B 3/68, E04F 13/08**

(21) Anmeldenummer : **89106577.3**

(22) Anmeldetag : **13.04.89**

(54) **Schiffswand.**

(30) Priorität : **30.04.88 DE 8805769 U**

(43) Veröffentlichungstag der Anmeldung :
**08.11.89 Patentblatt 89/45**

(45) Bekanntmachung des Hinweises auf die
Patenterteilung :
**17.06.92 Patentblatt 92/25**

(84) Benannte Vertragsstaaten :
**BE DE ES FR GB GR IT NL SE**

(56) Entgegenhaltungen :
**US-A- 1 986 014**
**US-A- 4 528 783**
**US-E- 22 091**

(73) Patentinhaber : **Perrakis, Emmanuel**
**Parkstrasse 18**
**W-2000 Hamburg 52 (DE)**

(72) Erfinder : **Perrakis, Emmanuel**
**Parkstrasse 18**
**W-2000 Hamburg 52 (DE)**

(74) Vertreter : **Hansmann, Dierk, Dipl.-Ing.**
**Patentanwälte Hansmann-Klickow-Hansmann**
**Jessenstrasse 4**
**W-2000 Hamburg 50 (DE)**

EP 0 340 496 B1

Jouve, 18, rue Saint-Denis, 75001 PARIS

## Beschreibung

Die Erfindung bezieht sich auf eine Schiffswand, bestehend aus einer Außenwandung und auf ihrer Innenseite über Träger angeordnete Isolierplatten, die über Befestigungselemente festsetzbar sind und Befestigungsöffnungen aufweisen, in deren Bereich ein Befestigungsbolzen angeordnet ist, der mit einer die Befestigungsöffnung abdeckenden Aufnahmeplatte zentral verbunden ist.

Die Ausbildung derartiger Anordnungen ist relativ aufwendig, da das Einbringen und die Zuordnung der Befestigungselemente relativ viel Zeit beansprucht um zu gewährleisten, daß hierdurch eine sichere Befestigung entsteht.

Aus der US-A-4 528 783 ist eine Vorrichtung bekannt, mit deren Hilfe es möglich ist, eine plattenförmige Verkleidung im Bereich einer Auflagefläche anzuordnen. Bei der plattenförmigen Verkleidung handelt es sich um ein Dekorationsmaterial, das beispielsweise zur Verschönerung von Innenräumen verwendet werden kann. Zur Befestigung des plattenförmigen Materials im Bereich der Auflagefläche werden stiftförmige Halterungen mit der Auflagefläche verbunden. Die Verbindung kann beispielsweise als eine Verschweißung realisiert sein. Im Bereich des plattenförmigen Materials sind Ausnehmungen vorgesehen, die die stiftförmigen Halterungen nach einem Aufsetzen der Verkleidungselemente umschließen. Die Halterungselemente weisen eine Oberflächenstrukturierung auf, die ein Aufschieben eines Befestigungsknopfes ermöglicht und ein unbeabsichtigtes Abziehen des Befestigungsknopfes vermeidet. Dies wird im wesentlichen durch eine etwa sägezahnförmige Oberflächenkonturierung des Stiftes erreicht. Nach einer vorgesehenen Anordnung der Verkleidungselemente werden die Befestigungsknöpfe auf die Stifte aufgedrückt und hierdurch eine irreversible Befestigung erzielt. Durch diese Befestigung ist es nicht möglich, eine einfache Auswechselbarkeit ohne Materialbeschädigungen zu realisieren. Darüber hinaus ist es aufgrund von auftretenden Montagetoleranzen nicht möglich, eine wasserdichte Anordnung der Verkleidungsplatten vorzunehmen. Zur Befestigung der Stifte im Bereich der Auflagefläche ist insbesondere daran gedacht, Bohrungen im Bereich der Auflagefläche vorzusehen, in die die stiftförmigen Halterungen eingeschlagen bzw. eingeschraubt werden.

Aus der US-E-22 091 ist es bekannt, eine aus Metall ausgebildete Grundfläche mit einem Verkleidungselement, beispielsweise einer Holzplatte, zu versehen. Im Bereich der Platte sind Ausnehmungen angeordnet, die zur Aufnahme von Zapfen vorgesehen sind. Die Zapfen greifen formschlüssig in Halterungselemente ein, die mit der metallischen Grundfläche verschweißt sind. Zur Erleichterung eines Einschiebens der Zapfen in die Halterungselemente sind im Bereich der Halterungselemente Einlaufflächen vorgesehen, die die Zapfen führen und zu einer Verformung der Zapfen beitragen. Ein beschädigungsfreies Entfernen der Zapfen aus den Halterungen ist aufgrund des im wesentlichen sägezahnförmigen Formschlusses nicht möglich.

Die Aufgabe der Erfindung besteht darin, eine gattungsgemäße Anordnung zu schaffen, die einen wirtschaftlichen Aufbau ermöglicht und neben der sicheren Befestigung einen günstige Isolierausbildung gewährleistet.

Die Lösung dieser Aufgabe erfolgt erfindungsgemäß dadurch, daß die Aufnahmeplatte an ihrer Oberseite eine Handhabe zum Einschrauben sowie einen in die Befestigungsöffnung: mit einem Spielraum hineinragenden Zentralkörper aufweist, die Befestigungsöffnung bei der Montage eine einfüllbare und aushärtende Isoliermasse aufnimmt, die Befestigungsöffnungen die zur Durchführung einer Schweißvorrichtung für einen auf den Träger aufschweißbaren Mutterkörper ausgebildet sind und dem aufgebrachten Mutterkörper jeweils einer der Befestigungsbolzen zugeordnet ist und die Befestigungselemente schraubbar ausgebildet sind.

Durch diesen Aufbau liegt der Mutterkörper frei in der Befestigungsöffnung und die Isolierplatte wird durch Einsetzen des Befestigungsbolzens über die abdeckende Aufnahmeplatte festgelegt, so daß nach entsprechender Ausrichtung durch die aushärtende Isoliermasse eine Festlegung zusätzlich erfolgt.

Um höhere Biegekräfte aufzunehmen und die Schweißnaht nicht übermäßig zu belasten, wird vorgeschlagen, daß der Mutterkörper durch einen Metallzylinder gebildet ist, der im Befestigungsbereich einen Flansch für eine Verbindungsschweißnaht mit dem Träger aufweist.

Weiterhin ist vorgesehen, daß der Befestigungsbolzen aus Metall mit einer aus Kunststoff gebildeten Aufnahmeplatte und einem Zentralkörper verbunden ist.

Eine weitere Verbesserung der Isolierung wird dadurch geschaffen, daß der Träger in einer Dämmschicht aus Mineralwolle eingebettet ist.

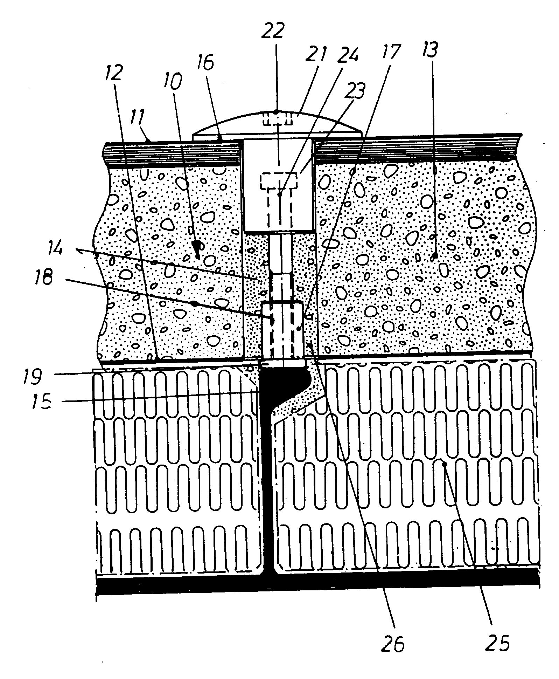

In der Zeichnung ist ein Ausführungsbeispiel der Neuerung als Schnittdarstellung mit seinen Einzelelementen schematisch dargestellt.

Bei der dargestellten Anordnung wird eine Isolierplatte 10 als sogenanntes Paneel durch einen Sandwichaufbau mit außenliegenden Platten 11,12 und einer Isolierstoffscheibe 13 gebildet, wobei der Isolierstoff üblicherweise durch Polyurethan gebildet wird.

Die Isolierplatte 10 besitzt zur Aufnahme im Bereich von einem zugeordneten Träger 15 Aufnahmeöffnungen 14. Diese Aufnahmeöffnungen 14 sind so bemessen, daß eine an sich bekannte Schweißvorrichtung einführbar ist, die einen Mutterkörper 17 zum Befestigen auf dem Träger 15 trägt. Hierbei wird der Mutterkörper 17 mit dem Träger 15 verschweißt.

Der Mutterkörper 17 besteht aus einem Metallzylinder, der eine Gewindebohrung 18 aufweist. Im Aufnahmebereich am Träger 15 ist der Mutterkörper 17 mit einem Flansch 19 versehen, der eine Schweißnaht mit einem größeren Radius gewährleistet und somit höhere Biegekräfte ohne übermäßige Belastung der Schweißnaht ermöglicht.

Für die Befestigung der Isolierplatte 10 ist eine Aufnahmeplatte 21 mit einem Befestigungsbolzen 24 vorgesehen, der in dem Mutterkörper 17 zugeordnet ist. Die Aufnahmeplatte 21 ist dabei mit einem Zentralkörper 23 versehen, der mit einem Spielraum in die Befestigungsöffnung 14 hineinragt. Zum Eindrehen des Befestigungsbolzen 24 ist die Aufnahmeplatte 21 mit einer Aufnahme 22 für ein Werkzeug versehen.

Vorzugsweise ist zwischen Träger 15 und aufgenommener Isolierplatte 10 eine elastische Zwischenscheibe angeordnet, wenn der Träger größer bemessen ist. Selbstverständlich kann auch eine entsprechende Scheibe 16 zwischen Aufnahmeplatte 21 und Isolierplatte 10 angeordnet sein.

Nach der Zuordnung der Befestigungselemente 17,24 und Anordnung der Isolierplatte 10, wird nach Einsetzen des Befestigungsbolzen 24 eine aushärtende Isoliermasse 26 in die Befestigungsöffnung 14 eingefüllt und der Befestigungsbolzen 21 festgesetzt.

In diesem Fall ist der Träger 15 in eine Dämmschicht 25 eingebettet.

## Patentansprüche

1. Schiffswand, bestehend aus einer Außenwandung und auf ihrer Innenseite über Träger (15) angeordnete Isolierplatten (10), die über Befestigungselemente festsetzbar sind und Befestigungsöffnungen (14) aufweisen, in deren Bereich ein Befestigungsbolzen (24) angeordnet ist, der mit einer die Befestigungsöffnung (14) abdeckenden Aufnahmeplatte (21) zentral verbunden ist, dadurch gekennzeichnet, daß die Aufnahmeplatte (21) an ihrer Oberseite eine Handhabe (22) zum Einschrauben sowie einen in die Befestigungsöffnung (14) mit einem Spielraum hineinragenden Zentralkörper (23) aufweist, die Befestigungsöffnung (14) bei der Montage eine einfüllbare und aushärtende Isoliermasse (26) aufnimmt, die Befestigungsöffnungen (14) die zur Durchführung einer Schweißvorrichtung für einen auf den Träger (15) aufschweißbaren Mutterkörper (17) ausgebildet sind und dem aufgebrachten Mutterkörper (17) jeweils einer der Befestigungsbolzen (14) zugeordnet ist und die Befestigungselemente schraubbar ausgebildet sind.

2. Schiffswand nach Anspruch 1, dadurch gekennzeichnet, daß der Mutterkörper (17) durch einen Metallzylinder gebildet ist, der im Befestigungsbereich einen Flansch (19) für eine Verbindungsschweißnaht mit dem Träger (15) aufweist.

3. Schiffswand nach Anspruch 1 oder 2, dadurch gekennzeichnet, daß der Befestigungsbolzen (24) aus Metall mit einer aus Kunststoff gebildeten Aufnahmeplatte (21) und einem Zentralkörper (23) verbunden ist.

4. Schiffswand nach einem der Ansprüche 1 bis 3, dadurch gekennzeichnet, daß der Träger in einer Dämmschicht (25) aus Mineralwolle eingebettet ist.

## Claims

1. Ship's wall, consisting of an outer wall and insulating panels (10), which are mounted on its inside via supports (15), are fixable via fixing elements and have fixing apertures (14), near which a fixing bolt (24) is located, which is concentrically connected to a receiving plate (21) covering the fixing aperture (14), characterised in that the receiving plate (21) has on its upper side a handle (22) for screwing in and a central body (23) projecting with clearance into the fixing aperture (14), the fixing aperture (14) when assembled receives a filling and hardening insulating compound (26), the fixing apertures (14) are formed for guiding through a welding device for a nut body (17) weldable on to the support (15), and each mounted nut body (17) is associated with a fixing bolt (14) and the fixing elements are capable of being screwed in.

2. Ship's wall according to claim 1, characterised in that the nut body (17) is formed of a metal cylinder, which has in the fixing region a flange (19) for a joining weld seam with the support (15).

3. Ship's wall according to claim 1 or 2, characterised in that the fixing bolt (24) composed of metal is connected to a plastics receiving plate (21) and a central body (23).

4. Ship's wall according to one of claims 1 to 3, characterised in that the support is embedded in an insulating layer (25) composed of mineral wool.

## Revendications

1. Paroi de navire constituée d'une paroi extérieure et d'une plaque isolante (10) disposée sur sa face intérieure au moyen de supports (15), ces plaques pouvant être fixées par des éléments de fixation et présentant des orifices de fixation (14) dans la zone desquels est disposé un boulon de fixation (24) qui est assemblé centralement à une plaque de reprise (21) recouvrant l'orifice de fixation (14), caractérisé en ce que la plaque de reprise (21) présente sur sa face supérieure une poignée (22) pour le vissage ainsi qu'un corps central (23) pénétrant avec jeu dans l'orifice de fixation (14), en ce que l'orifice de fixation (14) reçoit au cours du montage une masse isolante pouvant être déversée et durcie (26), en ce que les orifices de fixation (14) sont constitués pour réaliser une opération de soudage à un corps d'écrou (17) pouvant être soudé sur le support (15), en ce que l'un des boulons de fixation (14) correspond chaque fois au corps d'écrou (17) installé et en ce que les éléments de fixation sont disposés de manière à pouvoir être vissés.

2. Paroi de navire selon la revendication 1, caractérisée en ce que le corps d'écrou (17) est formé par un cylindre métallique qui présente, dans la zone de fixation, une bride (19) pour un cordon de soudure d'assemblage avec le support (15).

3. Paroi de navire, selon la revendication 1 ou 2, caractérisée en ce que le boulon de fixation (24), en métal, est assemblé à une plaque de reprise (21) en matière plastique et à un corps central (23).

4. Paroi de navire selon l'une des revendications 1 à 3, caractérisée en ce que le support est incorporé dans une couche isolante (25) en laine minérale.